# EUROPEAN PATENT APPLICATION

(11) **EP 1 995 018 A2**
(43) Date of publication of application: **26.11.2008**
(21) Application number: 08156118.5
(22) Date of filing: 13.05.2008
(51) Int. Cl.: B23Q 15/00, G05D 27/00

(54) **Electric spindle**

(30) Priority: 14.05.2007 IT BO20070355
(71) Applicant: HSD S.p.A., Pesaro (IT)
(72) Inventor: Selci, Giancarlo, 61100 Pesaro (IT)
(74) Representative: Jorio, Paolo

(57) **Abstract**

An electric spindle is provided with: an electric motor (5) having an output shaft (6) on which a tool can be fitted; a detection device (7) for detecting the evolution of at least one operating parameter of the electric spindle; and a memory (9) for storing the data acquired by the detection device (7).

## Description

The present invention relates to an electric spindle.

In particular, the present invention relates to an electric spindle of the type comprising: an electric motor provided with an output shaft defining a tool-holder spindle; and an attachment device associated to the spindle for axially locking a tool on the spindle.

Since the electric spindle is designed for operating with operating parameters at most equal to corresponding given threshold values, overstepping of said threshold values normally entails early failure of the electric spindle.

Known electric spindles of the type described above present certain drawbacks principally deriving from the fact that their failure does not enable manufacturers to establish whether the failure itself is caused by normal wear resulting from a proper use of the electric spindle, by an improper use of the electric spindle with values of the operating parameters higher than the corresponding threshold values, or by a defect of fabrication of the electric spindle, and forces in any case manufacturers to replace the electric spindle free of charge in the case where the failure were to occur during the period of warranty envisaged.

It is an object of the present invention to provide an electric spindle that is free from the drawbacks described above and that is simple and inexpensive to produce.

According to the present invention there is provided an electric spindle as specified in Claims 1 to 12.

The present invention moreover relates to a machine tool provided with an electric spindle.

According to the present invention, there is provided a machine tool as specified in Claims 13 to 17.

The present invention will now be described with reference to the annexed figure, which is a schematic illustration, in side elevation and with parts removed for reasons of clarity, of a non-limiting example of embodiment.

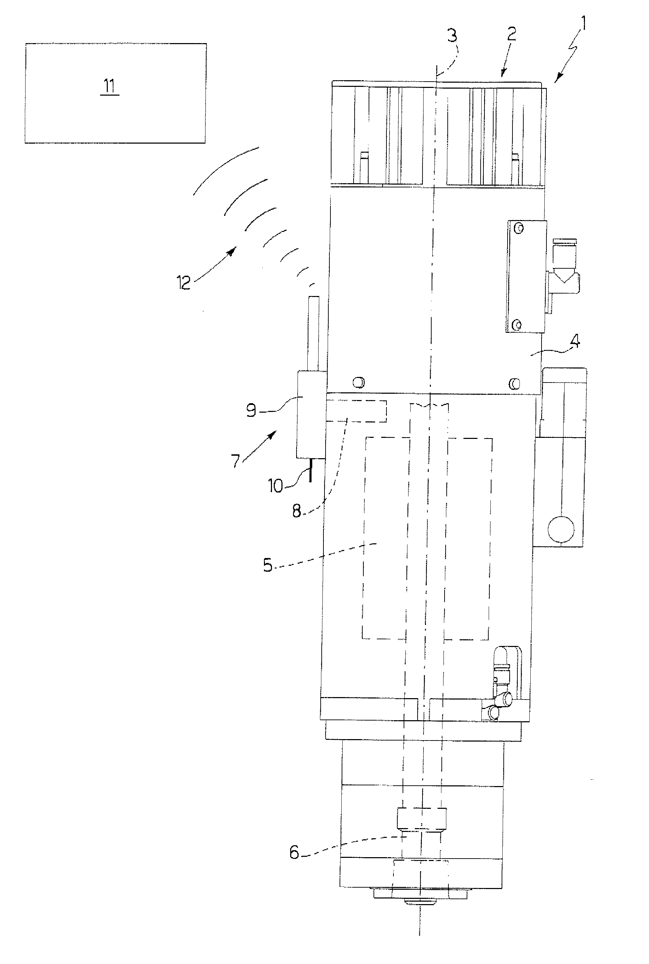

With reference to the attached figure, designated as a whole by 1 is a machine tool provided with an electric spindle 2, which has a given longitudinal axis 3, is made to advance in a known way in three directions substantially orthogonal to one another according to the machining operations to be carried out and the dimensions and shapes of the articles to be machined, and comprises a containment body 4, which extends around the axis 3 and houses inside an electric motor 5 provided with an output shaft 6 on which a tool (known and not illustrated) can be fitted.

The tool (not illustrated) is clamped on the shaft 6 via a coupling device (known and not illustrated) shaped for imparting on the tool (not illustrated) a rotary motion about the axis 3.

The electric spindle 2 is moreover provided with a detection device 7 comprising, in the case in point, at least one sensor 8 housed inside the body 4 for detecting in real time at least one operating parameter of the electric spindle 2 chosen in the set constituted by: instantaneous or maximum speed of the shaft 6; instantaneous or maximum acceleration of the shaft 6; time of use of the electric spindle 2; instantaneous or maximum temperature of the electric spindle 2; vibrations of the electric spindle 2; electrical current absorbed by the electric spindle 2; acceleration of the electric spindle 2 in the aforesaid three directions of advance; and position of the aforesaid coupling member (not illustrated) along the axis 3 and/or around the axis 3 itself.

The data acquired by the sensor 8 are stored in a memory 9 provided with an interface 10 designed to enable the operator to download the data acquired by the sensor 8 from the memory 9.

According to a variant (not illustrated), the electric spindle 2 is provided with a display for displaying the operating parameter detected by the sensor 8.

The machine tool 1 further comprises an electronic control unit 11 connected, in the case in point, to the electric spindle 2 via a transmission device 12, in the case in point a radio-signal transmission device, which can be alternative or auxiliary to the memory 9 and enables transmission of the data acquired by the sensor 8 to the control unit 11 itself.

In use, the instantaneous value of the operating parameter detected in real time by the sensor 8 is transmitted to the control unit 11 to enable feedback control by the device 12 of operation of the electric spindle 2 when the instantaneous value detected by the sensor 8 differs from a reference value stored in the control unit 11 and to prevent, for example, overstepping of a given threshold value and, hence, stoppage of the machine 1 for the consequent maintenance operations.

The presence of the detection device 7 moreover enables the manufacturer of the electric spindle 2 to control operation of the electric spindle 2 and establish with certainty whether the failure of the electric spindle 2 is caused by normal wear deriving from proper use of the electric spindle 2, by an improper use of the electric spindle 2, or by a defect of fabrication of the electric spindle 2 itself.

In other words, in the case where the failure of the electric spindle 2 occurs in the period of warranty envisaged, the manufacturer of the electric spindle 2 can establish with certainty whether to apply the period of warranty or not.

## Claims

1. An electric spindle comprising an electric motor (5) provided with an output shaft (6) defining a tool-holder spindle on which a tool can be fitted; and **characterized in that** it further comprises a detection device (7) for detecting the evolution of at least one operating parameter of the electric spindle and a memory (9) for storing the data acquired by the detection device (7).

2. The electric spindle according to Claim 1, wherein the memory (9) comprises at least one interface (10) for downloading the data acquired by the detection device (7) and stored in the memory (9) itself.

3. The electric spindle according to Claim 1 or Claim 2, wherein the operating parameter is an operating parameter chosen from the set constituted by instantaneous or maximum speed of the output shaft (6), instantaneous or maximum acceleration of the output shaft (6), time of use of the electric spindle, instantaneous or maximum temperature of the electric spindle, acceleration of the electric spindle in at least one direction of advance, vibrations of the electric spindle, and electrical current absorbed by the electric spindle.

4. The electric spindle according to any one of the preceding claims and further comprising a display for displaying the evolution of the operating parameter detected by the detection device (7).

5. The electric spindle according to any one of the preceding claims and further comprising a transmission device (12) for transmitting the data acquired by the detection device (7) to an electronic control unit (11) of a machine tool.

6. The electric spindle according to Claim 5, wherein the transmission device (12) is a radio-signal transmission device.

7. An electric spindle comprising an electric motor (5) provided with an output shaft (6) defining a tool-holder spindle on which a tool can be fitted; and **characterized in that** it further comprises a detection device (7) for detecting the evolution of at least one operating parameter of the electric spindle and a transmission device (12) for transmitting the data acquired by the detection device (7) to an electronic control unit (11) of a machine tool.

8. The electric spindle according to Claim 7, wherein the transmission device (12) is a radio-signal transmission device.

9. The electric spindle according to Claim 7 or Claim 8, wherein the operating parameter is an operating parameter chosen in the set constituted by: instantaneous or maximum speed of the output shaft (6); instantaneous or maximum acceleration of the output shaft (6); time of use of the electric spindle; instantaneous or maximum temperature of the electric spindle; acceleration of the electric spindle in at least one direction of advance; vibrations of the electric spindle; and electrical current absorbed by the electric spindle.

10. The electric spindle according to any one of Claims 7 to 9 and further comprising a display for displaying the evolution of the operating parameter detected by the detection device (7).

11. The electric spindle according to any one of Claims 7 to 10 and further comprising a memory (9) for storing the data acquired by the detection device (7).

12. The electric spindle according to Claim 11, wherein the memory (9) comprises at least one interface (10) for downloading the data acquired by the detection device (7) and stored in the memory (9) itself.

13. A machine tool comprising: an electric spindle (2) having an electric motor (5) provided with an output shaft (6) defining a tool-holder spindle on which a tool can be fitted; and an electronic control unit (11) for controlling operation of the electric spindle (2); and being **characterized in that** the electric spindle (2) further comprises a detection device (7) for detecting the evolution of at least one operating parameter of the electric spindle (2) itself; a transmission device (12) being provided for transmitting the data acquired by the detection device (7) to the electronic control unit (11).

14. The machine tool according to Claim 13, wherein the detection device (7) comprises a measurement device (8) for measuring in real time the instantaneous value of said operating parameter and enabling feedback control by the transmission device (12) of the electric spindle (2) when the instantaneous value differs from a reference value stored in the electronic control unit (11).

15. The machine tool according to Claim 13 or Claim 14, wherein the transmission device (12) is a radio-signal transmission device.

16. The machine tool according to any one of Claims 13 to 15, wherein the operating parameter is an operating parameter chosen in the set constituted by: instantaneous or maximum speed of the output shaft (6); instantaneous or maximum acceleration of the output shaft (6); time of use of the electric spindle (2); instantaneous or maximum temperature of the electric spindle (2); acceleration of the electric spindle in at least one direction of advance; vibrations of the electric spindle (2); and electrical current absorbed by the electric spindle (2).

17. The machine tool according to any one of Claims 13 to 16, wherein the electric spindle (2) further comprises a display for displaying the evolution of the operating parameter detected by the detection device (7).
